Europäisches Patentamt

European Patent Office

Office européen des brevets

(11) Publication number: **0 332 466**
**A2**

## (12) EUROPEAN PATENT APPLICATION

(21) Application number: **89302404.2**

(22) Date of filing: **10.03.89**

(51) Int. Cl.⁴: **F 04 F 5/46**

(30) Priority: **11.03.88 US 167078   06.09.88 CA 576603**

(43) Date of publication of application:
**13.09.89   Bulletin   89/37**

(84) Designated Contracting States:
**DE ES FR GB GR IT NL SE**

(71) Applicant: **RHEON TECHNOLOGY INC.**
**nr. 11 - 12171 Bridgeport Road**
**Richmond British Columbia, V6V 1J4  (CA)**

(72) Inventor: **Taylor, Norman F.**
**3-1355 West 13th Avenue**
**Vancouver British Columbia, V6H 1N7  (CA)**

**Webber, James R.**
**10887 - 79th Avenue**
**Delta British Columbia, V4C 7Y2  (CA)**

(74) Representative: **Gilding, Martin John**
**Eric Potter & Clarkson 14 Oxford Street**
**Nottingham NG1 5BP  (GB)**

(54) Liquid pump apparatus.

(57) A liquid pump for conveying sensitive material from a first to a second location. A primary liquid is discharged through an annular orifice substantially tangential to a Coanda surface to provide the suction and momentum then imparted to secondary flow in a main duct. The secondary flow carries the sensitive material such as live fish.

EP 0 332 466 A2

Bundesdruckerei Berlin

**Description**

## LIQUID PUMP APPARATUS

### INTRODUCTION

### BACKGROUND OF THE INVENTION

Field of the Invention

This invention relates to improvements in the pumping of liquids, such as water containing solids, and more particularly, to an improved liquid pump using an annular fluid jet supplied with a primary liquid for sustaining a flow of secondary liquid through a main duct.

Description of the Prior Art

Jet-type fluid pumps are well known and have been in use for a number of years. Typically in such pump, a main duct is provided with a series of jet nozzles directed inwardly at an angle to the axis of the main duct for generating and sustaining a flow of secondary fluid through the main duct when a primary liquid such as water, is forced into and through the jet nozzles. The secondary liquid, which can also be water, can carry solid materials from the inlet of the pump to the outlet and to a point of use downstream of the pump. In other designs of jet pumps, an annular jet orifice has been used which also utilizes a primary liquid injected and used to sustain a secondary liquid flow.

Disadvantages, however, are inherent in such designs when such pumps are used in some applications such as when it is desired to transfer delicate materials such as live fish or other sensitive commodities. This is so since the inwardly directed jet nozzles and/or the annular jet orifices allow the primary liquid to enter the secondary stream at an acute angle to the axis of the secondary fluid flow. Such liquid leaving the nozzles and orifice is frequently under high pressure and, therefore, the primary liquid can impact and damage the matter being carried within the secondary flow. For example, such a pump can damage and kill live fish being conveyed in the secondary flow.

The "Coanda" or wall attachment effect, first noted by the English physicist Thomas Young in 1800 and observed in 1933 by the Romanian engineer Henri Coanda, is caused by a fluid impacting on a so called "Coanda surface". This is a convex solid surface located immediately adjacent to the impacting fluid which is discharged tangentially or substantially tangentially along the surface. When a two-dimensional jet of fluid is so discharged, the jet may remain attached to the surface for a considerable period of time and, thus, it will change the angle of the fluid as it passes over the surface. Such a discharge is also accompanied by the entrainment of fluid surrounding the Coanda or convex surface which reduces the pressure above the surface and assists the suctioning action on the secondary flow.

The Coanda effect has typically been used for lift purposes in airplanes and hydrofoils. As air passes over the upper surface of a flap of an airplane, for example, even when the flap is considerably deflected, the air will follow the surface of the flap and will thereby contribute to increased lift.

Coanda surfaces have also been used in gas pumps and with liquids in flueric elements. For example, Coanda nozzles are used in burners to recirculate unburned gas in order to produce smokeless combustion. In flueric elements, because the fluid jet may attach to either of two surfaces, for example, the property can be used to construct switches and amplifiers.

The present invention proposes to use a Coanda surface in a jet-type pump used for carrying sensitive matter, such as live fish, within the secondary or main flow. While Coanda surfaces have been used in jet pumps, the pumps have not been adapted for carrying fish or other delicate commodities. The Coanda surface in a pump according to the invention is proposed to be located immediately downstream of the jet nozzles or jet orifice which are located such that primary liquid is discharged from the orifice or jet substantially tangential to the Coanda convex surface so that the primary fluid issuing from the jets or orifices is deflected along the Coanda surface to turn the high speed, high pressure jet away from the delicate commodity carried by the secondary flow.

### SUMMARY OF THE INVENTION

The present invention is directed to a jet-type pump in which a Coanda surface is located immediately adjacent the discharge jet or orifice from which primary flow issues and which impinges substantially tangential to the surface. Such a surface location will result in the high speed, high pressure jets being deflected along the Coanda convex surface and away from the axis of the secondary flow which carries a sensitive product such as live fish.

The present invention is also directed to a jet-type pump apparatus in which a plurality of such pumps may be used either in series or in parallel. Such a configuration allows the operator to increase the lift of the fish and/or the quantity of secondary flow passing through the pump.

According to the present invention an improved fluid pump apparatus is provided, having a first or primary fluid discharged substantially tangential to a Coanda surface and a secondary fluid which is conveyed along the central axis of the pump and is surrounded at the first or primary fluid discharge area by the Coanda surface. The secondary fluid is intended to carry a sensitive product such as live fish, from a first to a second location.

Other objects of this invention will become apparent as the following specification progresses, reference being had to the accompanying drawings for an illustration of the invention.

## BRIEF DESCRIPTION OF THE DRAWINGS

Specific embodiments of the invention will now be described, by way of example only, with the use of drawings in which:

Figure 1 is a vertical section through a jet-type fluid pump apparatus according to the present invention;

Figures 1A and 1B are fragmentary side elevational and cross-sectional views, respectively, of a perforate member forming a part of the main duct of the apparatus;

Figure 2 is a fragmentary end elevational view of the apparatus of Figure 1, looking from left to right;

Figure 3 is an end elevational view of the pump case forming an end part of the apparatus of Figure 1, looking at the direction of line III-III of Figure 4;

Figure 4 is a cross-sectional view taken along line IV-IV of Figure 3;

Figure 5 is an end elevational view of a perforate segment forming a part of the main duct of the fluid pump of the present invention;

Figure 6 is a vertical section through a portion of the segment of Figure 5;

Figure 7 is a side elevational view, partly in section, of the segment of Figures 5 and 6;

Figure 8 is a side elevation view of a multi-staged series configuration of three pumps according to the invention;

Figure 9A is a front elevation view of three pumps in a parallel configuration according to the invention;

Figure 9B is a side elevation view of the pumps of Figure 9A;

Figure 9C is a diagrammatic plan view illustrating one operating configuration for the pumps of Figures 9A and 9B; and

Figure 10 is a sectional view of a plurality of jets located annularly about the main duct, each jet being discharged along a Coanda surface according to a further embodiment of the invention.

## DETAILED DESCRIPTION OF THE PREFERRED EMBODIMENTS

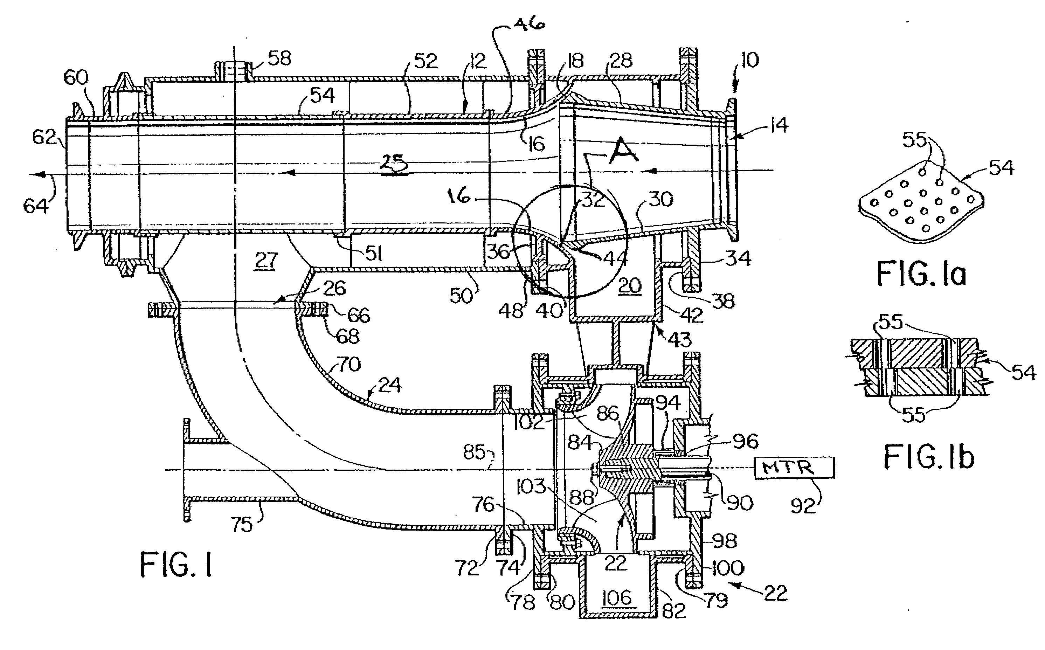

It is intended by the applicant to rely on the definition of "Coanda surface" as being a convex surface 16 as illustrated in the area noted A in Figure 1 and that the Coanda effect is that effect noted when a primary fluid is discharged substantially tangentially to the Coanda or convex surface 16 such that the surface changes the angle of the flow of the primary fluid to more closely resemble the flow of the secondary flow in the main duct. The fluid will follow the Coanda surface 16 for a distance and will be deflected so as to more closely resemble the flow along the axis 64 of the main duct carrying the secondary flow. The term "Coanda effect", therefore, is intended to cover the effect observed when the primary fluid is discharged substantially tangential to a Coanda or convex surface 16 and is deflected some amount by that surface. In some jet pumps, there are illustrated primary fluid inlets in which primary fluid exits into secondary fluid flow. The intersection between the fluid inlet and the duct carrying the secondary flow may have a small convex surface called a chamfer or a radius due to machine design and manufacturing tolerances. Such a surface is not intended to be covered by the present application. Indeed, such a surface, because of the very small radius relative to the radius of the Coanda or convex surface exerts little if any influence on the incoming primary liquid jets.

The pump of the present invention is generally denoted by the numeral 10 and includes a main duct generally shown at 12 for directing a secondary fluid from right to left when viewed in Figure 1. The secondary fluid enters the duct inlet 14 spaced upstream from the annular Coanda or convex surface 16 adjacent to an annular orifice 18 through which a primary fluid passes substantially tangential to the surface 16. The primary fluid, which typically is water, is obtained from a plenum 20, the plenum being supplied with primary fluid by a pump generally shown at 22 within a second duct generally shown at 24 whose inlet 26 is coupled by a plenum 27 to main duct 12 in a manner hereinafter described.

The main duct 12 is comprised of a number of interconnected, flanged sections which are connected at the flanges thereof to present a main fluid passage 25. The jet of primary fluid from annular orifice 18 generates a suction force which sustains the flow of secondary fluid in passage 25. The Coanda surface 16, working in cooperation with the tangential impingement or discharge created by orifice 18, causes a region of reduced fluid pressure adjacent to surface 16 in passage 25 to thereby enhance the flow of secondary fluid in such passage.

A first segment 28 forms an upstream part of duct 12 and has inlet 14 at one end thereof. Segment 28 has an inner surface 30 which increases in diameter or diverges as the downstream end 32 of segment 28 is approached. A typical inner diameter at inlet 14 is 8 inches and a typical inner diameter at end 32 is 10 inches. The jet orifice 18 has an open inner end which is greater in diameter than the throat defined by the central part of the convex or Coanda surface 16. This feature serves to protect the solid materials in the secondary flow, such as live fish, from damage as the secondary fluid flows past surface 16.

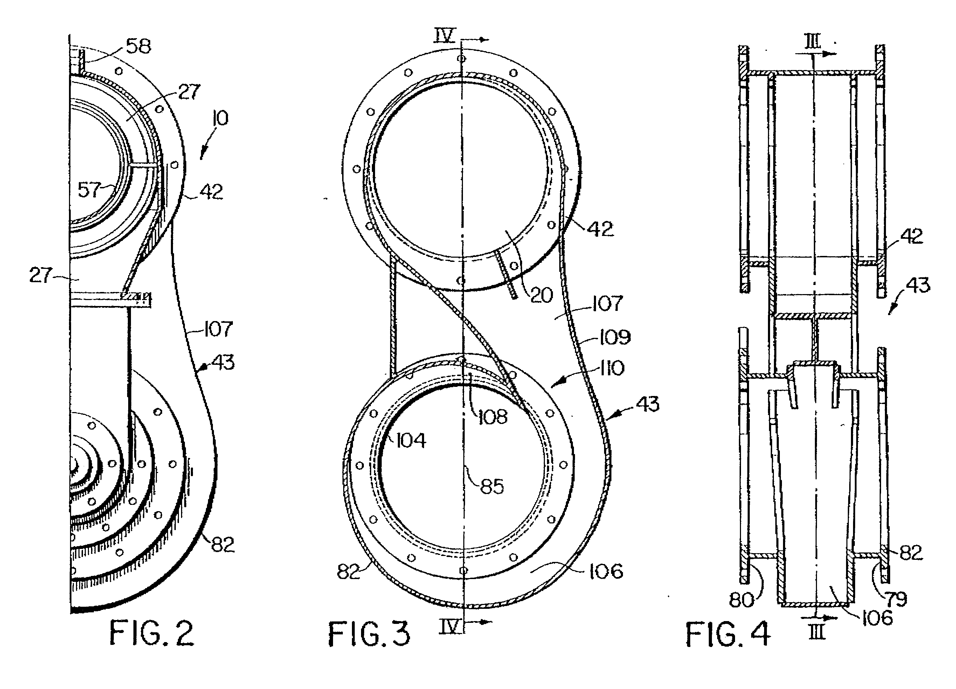

Segment 28 is generally transversely circular and has a flange 34 for coupling with a flange 38 of an upper part 42 of a pump case generally shown at 43 which surrounds segment 28 and defines plenum 20, the pump case 43 being hereinafter described with respect to Figures 3 and 4.

Segment 28 has an annular end boss 44 (Figure 1) which is transversely bell-shaped so that the downstream face of boss 44 defines the inner side boundary of jet orifice 18.

A second segment 46 forming another part of duct 12 has an annular flange 36 which is coupled with flange 40 of upper part 42 and flange 48 of an annular jacket 50 surrounding duct 12. Segment 46 is frustoconical and includes the transversely convex or Coanda inner surface 16. This surface extends downstream of boss 44 as shown in Figure 1. Surface 16 has a radius of curvature of about 6 inches when the diameter of inlet 14 is about 8 inches.

A third segment 52 is cylindrical in configuration and is coupled to the downstream end of segment 46. Typically, the diameter of segment 52 is about 8 inches when the diameter of inlet 14 is about 8 inches.

A fourth, generally cylindrical segment 54 is coupled to the downstream end of segment 52 and extends downstream therefrom. Segment 54 is a perforate tubular member or screen having a plurality of holes 55 (Figures 1a and 1b) to allow a portion of the secondary fluid flowing through passage 25 to be tapped off and to enter plenum 27 which is at the upstream end of second duct 24 as shown in Figure 1.

Segment 54 can be of any suitable construction so long as it is perforate. For purposes of illustration, it is formed from a 1/8 inch aluminum plate having punched or drilled holes 55 through it, the holes 55 typically being about 5/16 inch in diameter and 7/16 inch on centers. Approximately 46% of the area of segment 54 is comprised of the holes 55, and the thickness of the plate comprising segment 54 is greater by a factor of about 2 in the region where the segment 54 is aligned with the inlet end of second duct 24. This increased thickness is shown in Figure 1 wherein a thickness of the lower portion of segment 54 is greater than the thickness of the upper portion to provide for uniformity in volume rate of flow of fluid into plenum 27 from all holes 55 of segment 54. The thickened lower portion of segment 54 extends across the lower one-third part of the segment. Tab and slot means 51 (Figure 1) is used for alignment purposes with adjacent segment 52.

With regard to segment 54 and its wall characteristics, the desired effect is a circumferentially even flow of fluid through the wall of segment 54 into plenum 27. The maximum hole size (or bar spacing, see below) is set to be approximately equal to or less than the width of the primary orifice 18 (.300 to .330 inch), and also to be consistent with good practice for maintaining the centrifugal pump clear of debris.

In an alternate embodiment of segment 54, the perforate plate of segment 54 is doubled in thickness in the lower 1/3 portion of the segment by adding another layer of plate. In addition, the holes 55 of the two plates are offset from each other (Figure 1b) so as to present a reduced effective diameter and increased hydraulic resistance to flow. An alternative construction for this segment is to reduce the hole diameters in the lower 1/3 portion, and/or to increase the spacing. The net effect is a reduction of the area ratio from 46% in this portion.

A further embodiment would have the area ratio decrease gradually from the maximum 46% at the point diametrically opposite the flange 66, to a minimum at the point nearest flange 66.

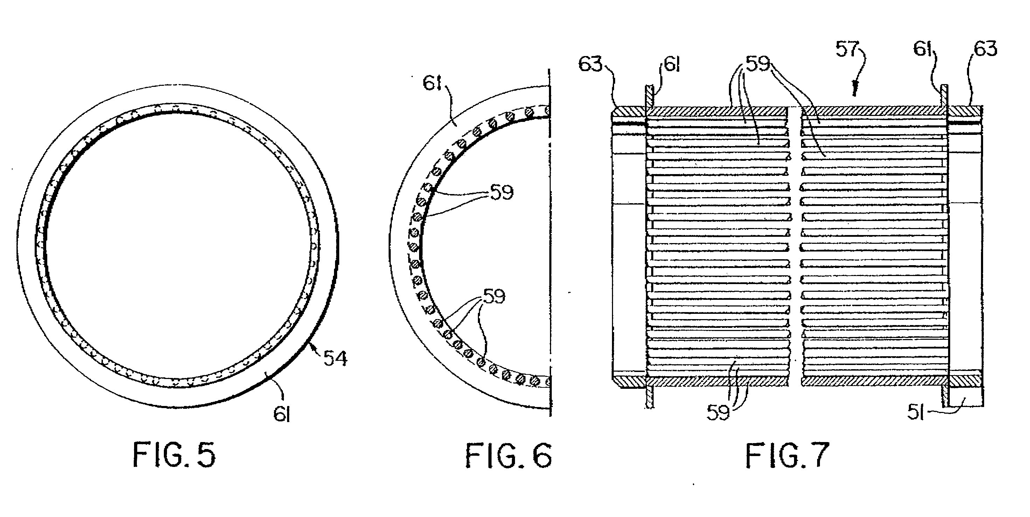

Another embodiment of segment 54 is shown in Figures 5-7 and includes a tubular body having a perforate side wall 57 made from a plurality of parallel rods which extend longitudinally by main duct 12 and form a cylindrical configuration for wall 57, adjacent rods 59 being spaced apart to present spaces which provide the perforate characteristic of the segment.

The rods are spot welded or otherwise secured to a pair of first end rings 61 which are secured to axially extending, second rings 63 adjacent thereto. Rings 63 are the mounting structures by which the segment 54 is coupled with adjacent duct segments of apparatus 10.

The spacing between the bars varies, depending upon the circumferential location of the bars. For instance, the lower 1/3 of the bars have a spacing between the bars of approximately 3/16 inch, the upper 1/3 of the bars have a spacing of approximately 5/16 inch and the side bars have a spacing of approximately 1/4 inch. The bars themselves are transversely circular and are approximately 1/4 inch in diameter. The area ratio at any point around the segment 54 shown in Figures 5-7 is similar to the case for perforate plate 54 (Figure 1), declining from a maximum of 56% at the diametrically opposite point to a minimum of 43% near the entrance to second duct 24. An alignment tab 51 can be provided off one end of segment 54 (Figure 7) for alignment purposes with main duct 12.

A fluid entrance port 58 is provided on jacket 50 and permits priming of the second duct 24 during the initial phases of operation of apparatus 10.

Another tubular segment 60 is coupled to segment 54 downstream of the latter and defines the discharge outlet 62 of apparatus 10. Fluid flowing through main passage 25 will flow out of outlet 62 in the direction of arrow 64 (Figure 1) to a collection station or to a second, identical apparatus 10, if desired.

Plenum 27 forms part of the interior of jacket 50 which has a flange 66 coupled to a flange 68 of a curved pipe 70 forming a part of second duct 24. Pipe 70 has a downstream flange 72 coupled to a first end flange 74 of a cylindrical part 76 which is coupled at its opposite end flange 78 to the flange 80 of a second part 82 of pump case 43.

Pipe 70 further has a small pipe 75 for providing a means through which a shaft can extend if apparatus 10 is to be a part of a multi-stage system in which there will be at least one additional apparatus 10 coupled to the downstream end 62 of the apparatus 10 shown in Figure 1. Thus, a common shaft, with bearings and seals, will couple the pumps 22 of the apparatuses in series with each other so as to render the system more efficient notwithstanding the number of apparatuses 10 which are coupled together to form the system.

Pump 22 is a centrifugal pump in which a rotor 84 has a hub 86 secured by a cap screw 88 to one end of a shaft 90 which is adapted to be coupled to a power source, such as a motor 92, adjacent to apparatus 10. Shaft 90 is mounted by means of a rotary seal part 94 and a fixed seal part 96 and bearings (not shown) to a mounting plate 98 whose flange 100 is coupled to a flange 79 of lower part 82 forming a portion of pump case 43.

Rotor 84 has a number of spaced blades 102, only two of which are shown in Figure 1. The rotor can have any number of blades but typically, the rotor will have six blades uniformly spaced apart on the hub 86.

Pump case 42 may be considered as part of the second duct 24. The pump case is shown in Figures 3 and 4 with the lower part 82 of the pump case having impeller 84 therewithin, the center line of the impeller being denoted by the numeral 85. Blades 102 of impeller 84 sweep out a space whose outer periphery is denoted by the line numeral 104 (Figure 3). The interior of lower part 82 defines a space 106 (Figure 3) having the configuration of a volute which extends from a location 108 of minimal volume in a counterclockwise sense to a region 110 of maximum volume, space 106 surrounding the space which is swept out by blades 102. Primary fluid is then directed from the volute space 106 into and through a connecting passage 107 of a tubular part 109, then into the upper part 42 of pump case 43 and thereby into plenum 20 which surrounds segment 28 in a manner shown in Figure 1.

As the shaft 90 rotates, blades 102 rotate in a counterclockwise sense when viewing Figure 3, and the blades pump or force primary fluid by centrifugal action from volute space 106 into plenum 20 where the water is directed under pressure into orifice 18 for flow into the secondary fluid through passage 26.

In operation, the inlet 14 of apparatus 10 is coupled typically to a hose or pipe which extends laterally from inlet 14 and then downwardly into a body of water, such as water in the hold of a ship containing live fish to be transported by apparatus 10 to a location downstream of apparatus 10. The outlet 62 will be typically connected to a hose or pipe which extends to the left (Figure 1) and then upwardly to a collection station, such as a container for receiving the fish in a live condition.

Priming of the system is generally required to initiate the flow of secondary fluid in main passage 26. This can be achieved by directing water under pressure into port 58 with the water flow being controlled such that main passage 26 and pipe 70 will be filled. To achieve this, a check valve (not shown) will be a part of the hose or pipe connected to the inlet end 14 of apparatus 10.

By causing operation of motor 92, impeller 84 is rotated to cause blades 102 to direct water through the pump case from lower part 82, along and through the volute space 106 (Figure 3), then upwardly into plenum 20 and then through orifice 18 and substantially tangential to the Coanda surface 16 to create a flow of primary fluid along the Coanda surface 16 at a velocity higher than that of the secondary fluid. This will cause a suction force, by virtue of the Coanda effect, and momentum transfer from the primary fluid to the secondary fluid in inlet 14, causing live fish and water (secondary fluid) to be directed upwardly from the body of water connected by the hose or pipe to inlet 14. Then, the priming action of water fed through port 58 can cease, the port is plugged, and the flow through main passage 26 of secondary liquid is thereafter sustained. Flow through second duct 24 will likewise be sustained by virtue of the tapping off of the secondary water flow through screen-like segment 54. The water flowing through the screen flows downwardly and into second duct 24 which feeds pump 22. The pumping action of pump 22 continues so long as motor 92 is energized and as long as water is directed into orifice 18 for flow past the Coanda surface 16.

During operation, segment 54 is designed to cause minimum flow restriction and not to admit particles large enough to clog the primary orifice 18 back to impeller 84. The flow over the screen-like segment 54 will generally be self-cleaning. Segment 54, segment 28 and impeller 84 can be quickly and easily removed from their mountings for service and cleaning.

The primary fluid passes between the bell-shaped boss 44 and the convex or Coanda surface 16 as it moves from plenum 20 through orifice 18. Preferably, the passage between the bell-shaped boss 44 and the convex or Coanda surface 16 is of a length such that the flow of primary fluid becomes substantially parallel to the walls of the passageway. It has been found that a minimum preferred length for the passageway is approximately 2.5 - 3.0 times the width of the passageway. In addition, the inlet to the passageway is preferably smoothly curved in order to reduce the pressure loss in the primary fluid as it passes through the passageway. The pump 22 is desirably close to orifice 18 to thereby eliminate the need for hoses which contribute to friction losses. The closed loop feature of apparatus 10 reduces the amount of water in the discharge line connected to outlet 62 (Figure 1) which thereby reduces the friction head loss in the discharge line itself.

Apparatus 10 can be multi-staged by connecting apparatus 10 in series with other, similar or identical apparatuses 10. In series, the individual apparatuses 10 can be driven from a common power source or individually driven by separate power sources. For a common power source the various apparatuses would have pump impellers mounted on a common shaft, such as shaft 90, rotatable about an axis, such as axis 85 of shaft 90. In series, the discharge or outlet end 62 of one apparatus 10 will be connected to the inlet end 14 of the next adjacent apparatus 10. The average efficiency per stage increases over a single stage apparatus because each successive downstream stage apparatus need not have to accelerate said suction flow to the required velocity. A number of apparatuses 10 can also be coupled in parallel with each other.

The closed loop feature of the present invention reduces the required handling capacity of the dewatering system downstream of apparatus 10. The dewatering device would only have to handle secondary or induced water flows.

The placement of the primary orifice 18 on a diameter larger than that of the suction and discharge lines is intended to place the highest velocity of the Coanda jet 18 away from the products, particularly delicate products such as live fish, in the secondary fluid. This is shown in Figure 1 where the maximum diameter of segment 28 is greater than the diameter of the central portion of Coanda surface 16. The jet of water from orifice 18 entrains the suction flow through segment 28 by the Coanda effect and by momentum transferred through shear. The jet of water through orifice 18 will have lost a significant amount of energy by the time it reaches the region of passage 26 in which the product is traveling to segment 52. Because the water discharged from orifice 18 follows the Coanda or convex surface 16, the water will be further deflected away from the axis of the main duct 12. Damage to the product will thereby be further reduced.

Among the possible uses of apparatus 10 is the handling of live fish and other foodstuffs, the handling of other delicate or sensitive material and the handling of debris-laden liquids. Industrial and commercial applications include uses in aquaculture, wild fish processing, agricultural products processing, underwater archeology and salvage, among others.

A typical width of orifice 18 is in the range of .300 inch to .330 inch at 30 brake horsepower of motor 92 and at a flow of 2000 gallons per minute from the impeller 84 at 20 PSIG. At these parameters, a typical velocity of fluid flow through passage 26 is approximately 8 feet per second with a 5 foot elevation difference total between the hose inlet and the hose outlet.

Second duct 24 is shown in Figure 1 as being below first duct 12. However, it could be to the side of the duct or above duct 12, if desired. Apparatus 10 could be oriented so that main duct 12 is vertical with inlet 14 at the bottom and discharge end 62 at the top.

While the embodiment described in detail hereinbefore utilizes recirculated water obtained from the secondary flow for the primary liquid, it should be clear that recycled water is not necessary and that the primary fluid could be provided by the same or a different source of fluid as is available for the secondary flow.

In the event that recycled water is not used or simply as an additional embodiment to the apparatus illustrated in Figure 1, the third segment 52 may have a continuously expanding diameter downstream from the Coanda surface 16. In this configuration, the third segment 52 would be known and act as a "diffuser". With such a configuration, there would be a tendency to maintain a more uniform velocity of water in the main duct 12 after the injection of the primary fluid through the annular orifice 18. The maintenance of a relatively uniform velocity in the main duct 12 is desirable when delicate commodities, such as live fish, are being carried by the secondary liquid in the main duct 12 as the environment for the transported commodities becomes more benign and therefore more beneficial to their well being.

While the fourth segment 54 has been described as having several configurations, it is further contemplated that the design be such that liquid is released from the fourth segment 54 only minimally at the portion of the segment 54 adjacent the outlet of the third segment 52. Liquid would thereafter be discharged at an increasing rate until a maximum amount was released at a position downstream of the minimal release location. Thereafter, the liquid release would be gradually reduced until no further liquid was released. This would result in a smooth water discharge curve being obtained which would, again, be beneficial to delicate commodities as reduced disruptions would occur during the movement of the commodities through the main duct 12. One design which would achieve this end would include a minimum number of holes for liquid discharge adjacent the outlet end of the third segment 52 with the number of such holes increasing as the distance of the fourth segment 54 was traversed downstream until the maximum liquid discharge area was reached. Thereafter, the number of such holes would reduce gradually until no further water was released by fourth segment 54.

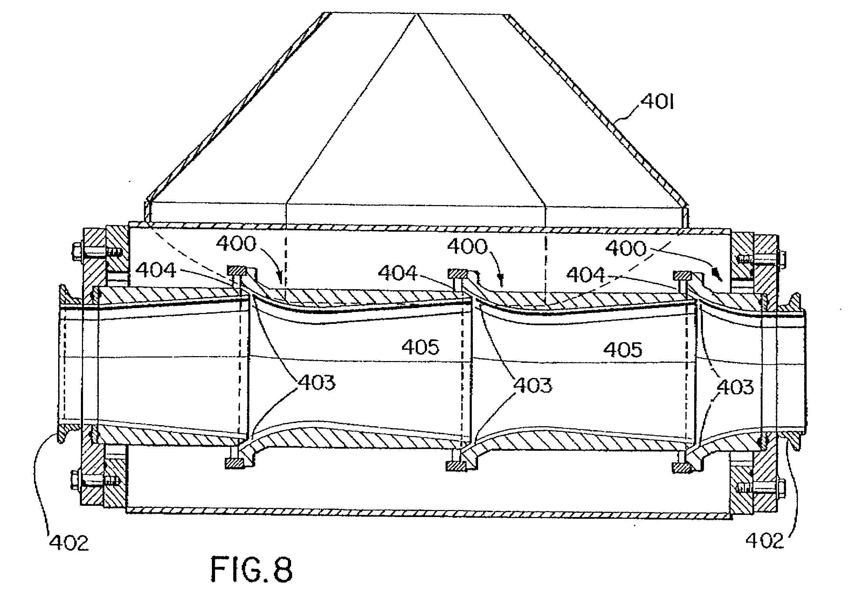

A further embodiment of the invention is illustrated in Figure 8. In this embodiment, three pumps 400 are mounted in series, desirably being mounted on a common plenum or manifold 401. In this embodiment, the inlet pipe (not shown) which extends to the secondary liquid which contains the product to be transported from a first to a second location is connected to the inlet end 402 of the series configuration of the pumps 400. The plenum 401 is connected to each of the annular orifices and water is discharged from the orifices substantially tangential to each of the Coanda surfaces 403. This embodiment would be preferred if, for example, the transported liquid was to be raised or transported a relatively greater distance than the distance normally used with the configuration of Figure 1. It will further be noted that the surfaces 405 downstream of each orifice 404 diverge, again as is desirable to separate the commodities from the primary fluid inlets.

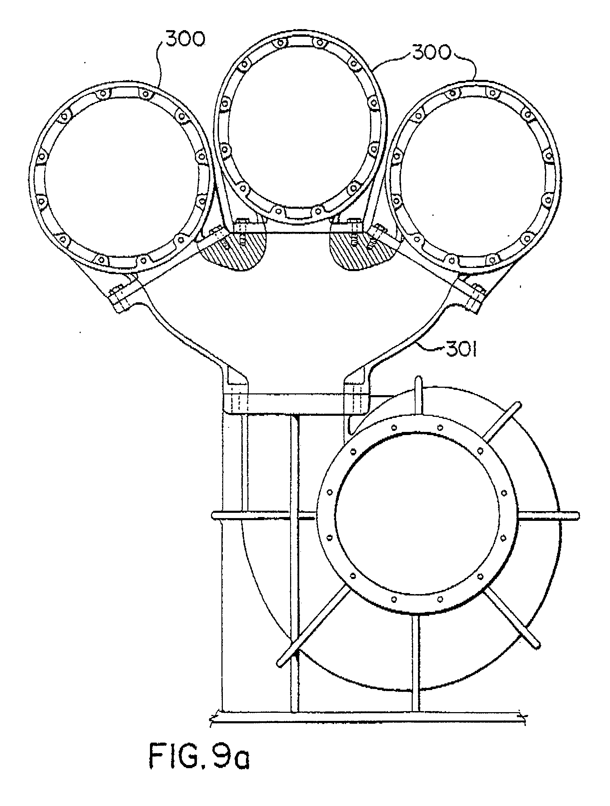

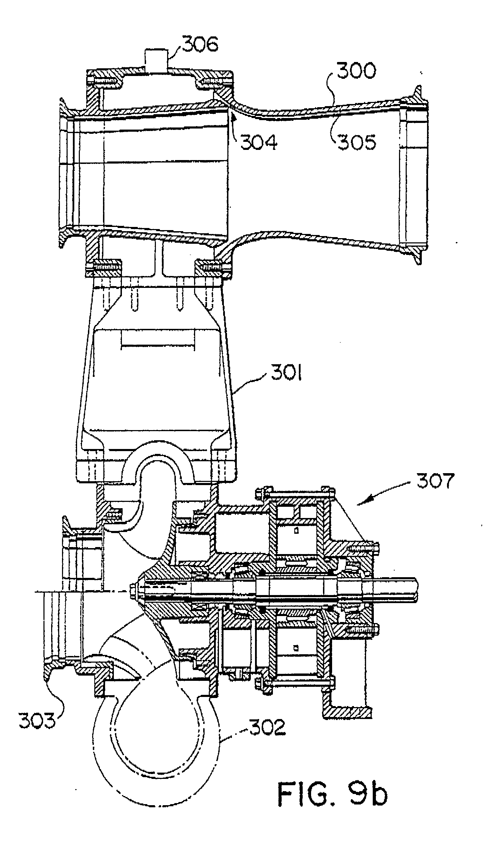

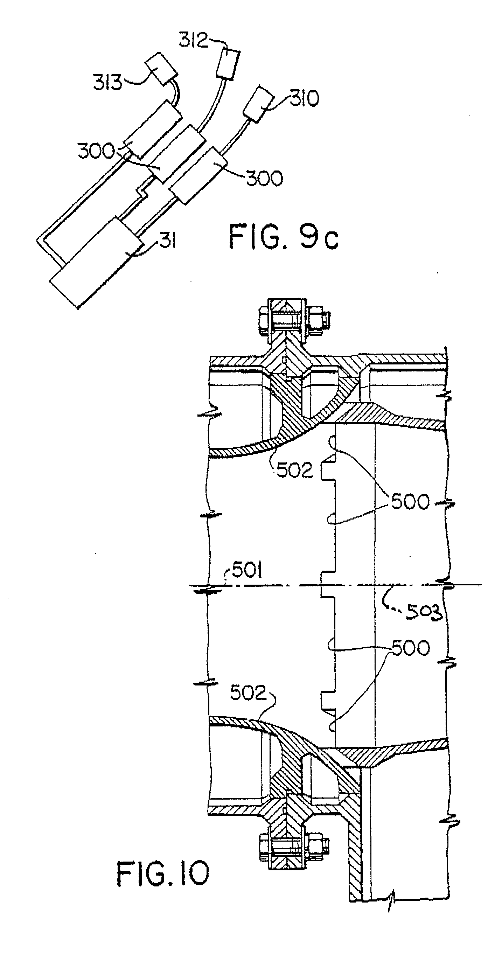

Yet a further embodiment of the invention is illustrated in Figures 9A and 9B where three pumps 300 are mounted in parallel, again desirably on a common plenum or manifold 301, the manifold 301 extending to an impeller type pump 302 similar to the embodiment illustrated in Figure 1. In this embodiment, a source of water is connected to the inlet end 303 of pump 302 and pump 302 acts to discharge the water into plenum 301 and thence out the annular orifice 304 of each pump 300.

The parallel configuration of the pumps 300 illustrated in Figures 9A and 9B is particularly desirable when the water is not recirculated as it is in association with the Figure 1 embodiment.

The pumps 300 may be used for different pumping actions as illustrated in Figure 9C. For example, one pump 300 may be used to move liquid from a first to a second location 310, 311, respectively and the second pump 300 may be used concurrently to subsequently transfer liquid from the second location 311 to a third location 312. The third pump 300 may also be concurrently used to transfer fluid from the second location 311 to a fourth location 313. Thus, versatility is obtained with such a configuration of pumps 300.

Since the embodiments illustrated in Figures 8 and 9 do not contemplate water removal close to the primary liquid inlet orifices, the segments located downstream are desirably diverging in diffuser configurations illustrated at 405 of Figure 8 and 305 of Figure 9. Such a configuration, as earlier described, will assist in maintaining a relatively more constant velocity of liquid in the main ducts of the pumps.

In addition to the annular continuous orifice located about the main duct 12 and in the remaining embodiments illustrated, it should be clear that a plurality of orifices located annularly about the circumference of the main duct 12 are also contemplated and covered by the invention. With reference to Figure 10, the orifices 500 each allow a jet of primary liquid to exit into the main duct, the primary liquid impinging upon each Coanda surface 502 which, as illustrated in Figure 10, is continuous. Likewise, each orifice 500 may have a respective Coanda surface separate from the Coanda surfaces of each other jets. What is required is that the liquid emanating from each primary liquid orifice is turned away from the axis 503 of the main duct 501 by a respective Coanda surface 502. It will be seen that the convex or Coanda surface 16 could be continuous with the several jets, each jet being discharged substantially tangential to the continuous surface 16.

Although there has been described a technique for priming the pump as illustrated in Figure 1, other techniques could also be used. For example, a check valve (not shown) could be connected to the outlet end 62 of the tubular segment 60. A vacuum would be drawn at inlet 58 until the source water covered the primary inlet orifices 18 whereupon the operation of the pump 22 would be commenced and flow would be sustained.

Likewise and in connection with the Figure 9B embodiment, a vacuum could be drawn on inlet 306 by a vacuum pump 307. The vacuum would gradually draw liquid into the pump 300 until the primary inlet orifices 304 were covered by the liquid. Thereafter, the impeller pump 302 would commence operation to provide liquid to the primary inlet orifices 304 and flow would then be sustained.

In a further embodiment of the invention, reference is made to Figure 1. Whereas the plenum 27 is illustrated as being relatively small such that liquid discharged by the fourth segment 54 moves quickly into and through pump 22, a much larger plenum 27 is contemplated where the amount of water waiting to enter pump 22 is large and where there would accordingly be less disruption to the flow through the main duct 12. Again, this would be desirable for the commodities carried in the secondary flow, particularly such commodities as live fish.

Although several specific embodiments of the invention have been described, such descriptions are intended to be illustrative of the invention only and not as limiting the scope of the invention as defined in accordance with the accompanying claims.

## Claims

1. A liquid pump comprising a main duct having an inlet and an outlet said main duct including a first segment having an inlet end and an outlet end, said first segment being operable to be coupled to a source of fluid to be moved from a first location to a second location; means coupled with said first segment for forming an annular orifice for directing a primary liquid into said main duct at a location downstream of said inlet; and an annular Coanda surface located downstream of said orifice, said Coanda surface being positioned to intercept liquid issuing from said orifice substantially tangential to said surface.

2. A liquid pump as in claim 1 wherein said first segment has a conical inner surface, said segment increasing in diameter as the outlet end is approached.

3. A liquid pump as in claim 2 wherein said first segment is transversely circular.

4. A liquid pump as in claim 1 wherein said annular orifice and said Coanda surface are substantially continuous around said outlet end of said first segment.

5. A liquid pump as in claim 1 wherein said Coanda surface merges smoothly into a second segment.

6. A fluid pump as in claim 5 wherein said second segment is cylindrical.

7. A fluid pump as in claim 5 wherein said second segment increases in diameter downstream of said orifice.

8. A liquid pump comprising a main duct having an inlet and an outlet, said main duct being operable to be coupled to a source of fluid to be moved from a first location to a second location, means coupled with said main duct for forming an annular orifice for directing a primary liquid into said first duct at a location downstream of said inlet, means associated with said orifice having an annular Coanda surface, said Coanda surface being located to intercept fluid directed from said orifice substantially tangential to said Coanda surface, said Coanda surface smoothly extending from said annular orifice and merging with the inlet end of a second segment.

9. A liquid pump as in claim 8 wherein said main duct further includes a first segment having an inlet end and an outlet end, said outlet end of said first segment being larger than the said inlet end of said second segment, said Coanda surface merging smoothly with said inlet end of said second segment.

10. A liquid pump comprising a main duct having an inlet and an outlet, said main duct including a first segment having an inlet end and an outlet end, said first segment being operable to be coupled to a source of fluid to be moved from a first location to a second location, means coupled with said first segment for forming an annular orifice for directing a primary liquid into said main duct at a location downstream of said inlet; and an annular Coanda surface located downstream of said orifice, said Coanda surface being positioned to intercept liquid issuing from said orifice substantially tangential to said surface and to merge smoothly into a second segment.

11. A liquid pump as in claim 1 wherein said second segment diverges smoothly downstream of said Coanda surface.

12. A method of moving a product within a first fluid from one location to a second location comprising directing said first fluid along a first duct comprising a first and second segment from an inlet to an outlet; and directing a second fluid into said first duct substantially tangential along an annular convex surface located adjacent to and surrounding the outlet end of said first segment at a velocity higher than the velocity of said first fluid.

13. A fluid pump operable to move fish from a first to a second location, said pump comprising a first duct having an inlet and an outlet, said duct being adapted to be coupled to a source of fluid containing said fish to be moved from said first location to said second location and having a first and second segment, said second segment having an outlet end; means coupled with said first duct for forming an annular orifice for directing a fluid into said first duct at a location downstream of said inlet; means downstream of said orifice for forming an annular convex surface, said surface being positioned to cause a deflection of said liquid from said orifice; said first segment having an inner surface which diverges and extends from said inlet to said outlet end.

14. A fluid pump as in claim 13 wherein said annular orifice is continuous about the periphery of said first duct.

15. A fluid pump comprising a first duct having an inlet and outlet, said duct being operable to be coupled to a source of fluid to be moved from a first location to a second location; means coupled with said first duct for forming an annular orifice for directing a fluid into said first duct at a location downstream from said inlet; and means downstream of said orifice for forming an annular convex surface, said surface converging from its upstream to its downstream end and being positioned to cause a deflection of said fluid impinging tangentially on said surface from said orifice.

16. A fluid pump as in claim 15 wherein said annular surface is a Coanda surface.

17. A fluid pump as in claim 16 wherein said first duct includes a first and second segment, said first segment extending from said inlet to said outlet in a diverging configuration and terminating at an outlet end adjacent said annular surface.

18. A fluid pump as in claim 17 wherein said annular convex surface converges relative to the circumference of said duct.

19. A fluid pump comprising:
a first duct having an inlet and outlet, said duct adapted to be coupled to a source of fluid to be moved from a first location to a second location;
means coupled with the first duct for forming an annular orifice for directing a fluid into the first duct at a location downstream of the inlet;
means downstream of the orifice for forming an annular Coanda surface, said surface being positioned to cause a deflection of the fluid from the orifice; and
a pump means coupled to the first duct for directing fluid to the orifice, said pump means having a second duct in fluid communication with the first duct at a location upstream of the outlet.

20. Apparatus as set forth in claim 19, wherein said pump means includes a centrifugal pump.

21. Apparatus as set forth in claim 19, wherein said first duct has a perforate segment, there being means for defining a plenum at least partially surrounding the perforate segment, said second duct being in fluid communication with said plenum.

22. Apparatus as set forth in claim 19, wherein said orifice has an inner diameter greater than the minimum diameter of the Coanda surface.

23. Apparatus as set forth in claim 19, wherein said first duct has a segment between said inlet and said orifice, the inner surface of the segment being conical and increasing in diameter as the orifice is approached.

24. Apparatus as set forth in claim 19, wherein the orifice has a gap width in the range of .300 inch to .330 inch.

25. Apparatus as set forth in claim 19, wherein the orifice has a line of action in the range of approximately 30-45 degrees with reference to the centerline of said first duct.

26. A jet-type fluid pump apparatus comprising:
a first duct having an inlet and outlet, said duct adapted to be coupled to a source of secondary fluid to be moved from a first location to a second location;
means coupled with the first duct for forming an annular jet orifice for directing a fluid into the first duct at an angle and at a location downstream of the inlet;
means downstream of the orifice for forming an annular Coanda surface, said surface being positioned to cause a deflection of the fluid from the orifice;
a second duct in fluid communication with the first duct at a location upstream of the outlet, said second duct being coupled to said orifice to supply fluid thereto; and
a pump having a rotor within said second duct.

27. Apparatus as set forth in claim 26, wherein said pump is a centrifugal pump.

28. Apparatus as set forth in claim 26, wherein is included a plenum in at least partially surrounding relationship to the first duct in proximity to and downstream of the inlet, said second duct being in fluid communication with the plenum for supplying fluid thereto, said plenum being in fluid communication with said orifice.

29. A method of moving a fluid from one location to another comprising:

directing a fluid along a first fluid path extending between an inlet and an outlet;

tapping off a portion of said fluid at a first location downstream of the inlet;

directing the tapped-off fluid portion along a second path in a closed loop to a location between the inlet and said first location; and

urging the tapped-off fluid portion back into said fluid through an annular orifice surrounding the first path, whereby the flow of fluid along said first path is sustained.

FIG. Ia

FIG. Ib

FIG. I

EP 0 332 466 A2

FIG. 2

FIG. 3

FIG. 4

EP 0 332 466 A2

FIG. 5                    FIG. 6                    FIG. 7

EP 0 332 466 A2

FIG.8

EP 0 332 466 A2

FIG. 9a

FIG. 9b

FIG. 9c

FIG. 10